# EUROPEAN PATENT SPECIFICATION

(11) **EP 0 509 561 B1**
(45) Date of publication and mention of the grant of the patent: **15.05.1996**
(21) Application number: 92111720.6
(22) Date of filing: 26.06.1990
(51) Int. Cl.: D21C 9/18

(54) **Method and apparatus for treating fiber suspension**
Verfahren und Vorrichtung zur Behandlung von einer Faseraufschwemmung
Procédé et appareil pour traiter une suspension fibreuse

(30) Priority: 06.07.1989 FI 893287
(43) Date of publication of application: 21.10.1992
(62) Divisional of application: 90909145.6
(73) Proprietor: A.AHLSTROM CORPORATION, SF-29600 Noormarkku (FI)
(72) Inventor: Heino, Jukka, SF-57600 Savonlinna (FI); Kohonen, Raimo, SF-57230 Savonlinna (FI); Savolainen, Erkki, SF-58410 Haapakallio (FI)
(74) Representative: Füchsle, Klaus, Dipl.-Ing.

(56) References cited:
- FR-A- 2 440 228
- US-A- 2 070 074
- US-A- 4 147 634
- US-A- 4 789 433

## Description

The present invention relates to a method and apparatus for treating pulp, which method and apparatus are especially suitable for treating fiber suspensions in the wood processing industry. The method and apparatus are particularly designed for thickening said suspensions, in other words filtering liquids from fiber suspensions in the pulp and paper industry.

The invention relates more closely to a so called drum filter, the basic construction of which comprises a vessel, into which suspension being thickened is supplied and a wire-surfaced cylinder rotating in the vessel. The ends of the cylinder have been sealed so as to prevent the cylinder from being filled with suspension. The cylinder has under its wire surface filtrate compartments, into which liquid from the suspension in the vessel is pressed due to the hydrostatic pressure, whereby the fibers in the suspension are transferred with the liquid to the wire surface and are thickened forming a fiber matting on it. The cylinder in this kind of filter based on hydrostatic pressure can be submerged in the suspension in the vessel only slightly below its axial level. When the cylinder rotates slowly, approximately 1 to 3 rpm, a fiber matting is slowly generated on the wire surface. The formation speed of the matting naturally depends not only on the thickness of the generated matting, but also on how deep in the vessel the filtration takes place. The filtration reaches its maximum speed slightly before the bottom dead centre, because the hydrostatic pressure is then close to its maximum and a thick matting does not yet disturb the filtration. After the bottom dead centre the formation of the matting slows down, until the formation, of course, ceases completely, when the matting rises from the suspension.

As the fiber matting descends into the vessel when the cylinder rotates the filtration begins, in other words the discharge of air and initial filtrate from the filtrate compartments without vacuum begins. The fiber matting is removed from the cylinder at a stage, when it has passed the top dead centre and approaches the surface of the suspension. The matting may be removed either mechanically with doctor blades or by injecting either liquid or compressed air through the wire surface. The liquid which has flowed into the filtrate compartments may be discharged from the apparatus, for example, via the shaft of the apparatus or by utilizing some other arrangement. The length of a filtration period based on hydrostatic pressure in an apparatus according to the above description is approximately 140° of a rotation of a cylinder and the proportion of the initial filtration is approximately 30°.

The above described basic type of a drum filter has been considerably improved over the decades. One significant improvement worth mentioning is subjecting the suspension in the vessel to a suction through the compartments, whereby the filtration of liquid improves considerably and thus the capacity of the apparatus increases significantly. Most usually the suction is carried out by a suction leg in such a way that each of the filtrate compartments is connected by means of a separate filtration tube to a valve connected to the suction leg in the shaft of the apparatus, the operation of which valve is controlled in such a way that the fiber matting is subjected to suction in a sector of approximately 240°. Approximately 30 filtrate compartments have been arranged on the cylinder, each of which compartments has been connected with a separate filtrate tube to the shaft tube of the cylinder surrounding the valve. Since the fiber matting generated this way is significantly more tightly attached to the filtrate surface than the matting generated in a conventional way, the thickened fiber matting must be removed by separate apparatuses from the filtrate surface. At this point it must be noted that the suction leg may be replaced by some other apparatus creating vacuum, such as a vacuum pump.

One alternative method for removing the fiber matting is that liquid or an air spray of opposite direction is supplied through the filtrate tubes into a filtrate compartment and via such way to the wire surface, whereby said spray blows the fiber matting off the surface and at the same time flushes the openings of the wire surface clear. In this arrangement the medium flow gained by a blower is led through said valve apparatus into filtrate compartments. Another alternative method is to arrange the blowing according to Finnish Patent 70803 (FR-A-24 40 228) via a nozzle directly from a source of compressed air under the mechanical doctor blade, whereby the actual removal process of fiber matting is carried out by the compressed air blown from the nozzles and the doctor blade only leads the removed fiber matting towards a desired direction away from the cylinder. As for said Finnish patent it is, however, obvious that the doctor blade is designed as rigid as possible considering the security factors, i.e. so as not to allow the tip of the doctor blade in any case to touch the wire surface of the cylinder and break it either by wearing or even by tearing. This, on the other hand, increases apparent disadvantages, such as adjusting the clearance rather large in order to be able to take into consideration all variations in the temperature of the doctor blade and the cylinder and the defects in the shape of the cylinder, whereby the clearance becomes so large that the thin pulp cake generated on the cylinder surface does not necessarily extend even as far as to the tip of the doctor blade from the wire surface. In practice, in some running situations the doctor blade does not even reach to remove the fiber matting off the wire surface not to mention to maintain the wire surface clear.

An apparatus according to the preamble of claim 1 or a method according to the preamble of claim 3 is known from US-A-20 70 074 for discharging cakes or webs formed on filter surfaces.

It is the object of the present invention to solve the problems of the prior art apparatuses in such a way that by applying the method and apparatus in accordance with the present invention it is possible to safely minimize the clearance between the tip of the doctor blade and the wire surface.

This object is solved according to the present invention by an apparatus including the features of claim 1 and a method including the features of claim 3, respectively.

The method and apparatus in accordance with the present invention are described more in detail below with reference to the accompanying drawings, in which:
Fig. 1 is an illustration of removal of pulp web on the filter cylinder in accordance with the pulp web and means utilized in the discharge, and
Fig. 2 is a more detailed illustration of the apparatus in accordance with the present invention.

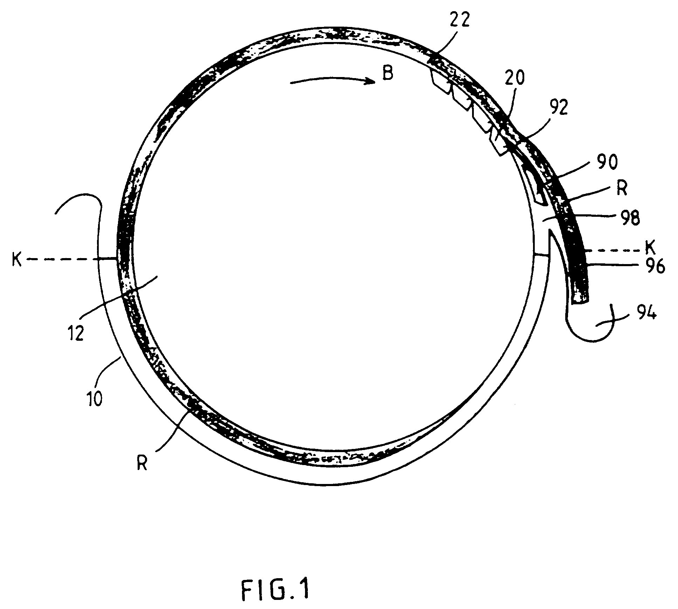

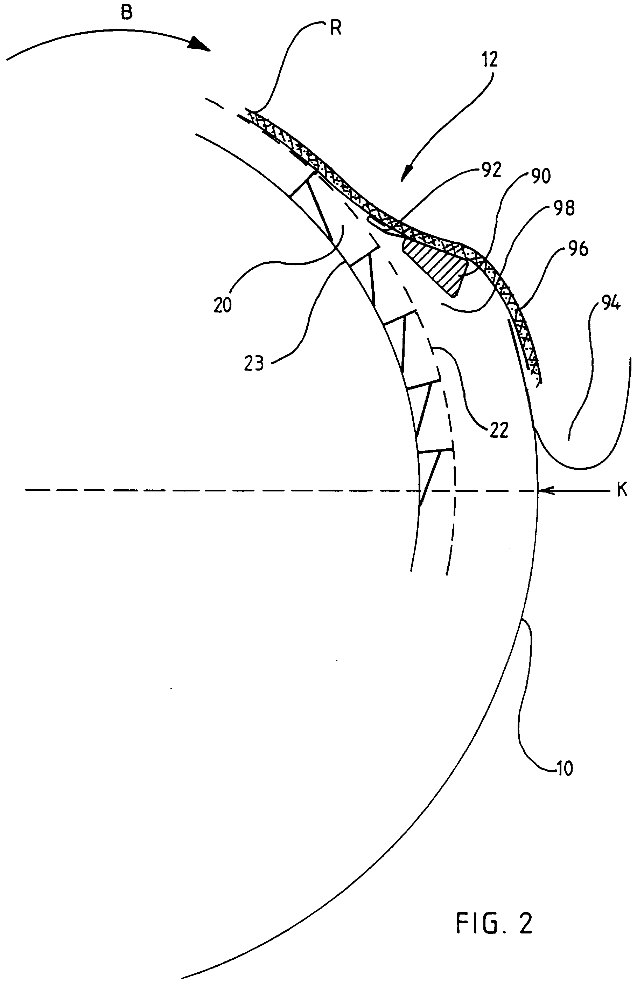

Figs. 1 and 2 illustrate the removal means for the pulp web of a drum cylinder in accordance with the present invention. The figure 1 schematically shows a vessel 10, in which a filter cylinder 12 provided with a wire surface 22 rotates. The vessel 10 is filled with fiber suspension up to a level K, which suspension forms a pulp web R on the wire surface 22 in the way shown in the figure. Removal and discharge means for the pulp web have been mounted subsequent to the top dead center of the cylinder 12 in the rotational direction B before the wire surface submerges into the suspension, said means comprising a doctor blade body 90, which is attached from the ends, for example, to the supporting structures of the end part of the vessel 10 or to the ends of the hood of the filter, a doctor blade 92 mounted to the body 90 and extending towards the wire surface forming a clearance therebetween and a slope 96 leading to the discharge trough 94 arranged outside the vessel 10. The doctor blade 92 is manufactured either of a plastics material, steel or some other material suitable for this purpose.

The removal of the pulp web from the wire surface is carried out in such a way that air or some other appropriate medium flow is led from the blower (not shown) into a space 98 defined by the wire surface 22, the surface of the suspension and the removed pulp web R, said space 98 being sealed from the sides by edge seals (not shown) mounted at the ends of the filter in such a way that the pressure difference required for the removal of the pulp web R from the wire surface can be maintained. Said removal medium flows and leads the pressure not only directly from the clearance between the doctor blade tip 92 and the wire surface 22 to the boundary surface between the wire surface and the pulp web but also under the wire surface via the filtrate compartment 20. Consequently, it is possible to remove the extremely thin pulp web, which has been impossible so far by the conventional apparatuses. Since the filtrate tubes in the removal stage are closed from the inner end by a closing member, the removal medium is not allowed to be discharged through the filtrate tubes, but the same pressure prevails in the filtrate compartment as in the space 98.

A significant advantage is achieved with this arrangement, namely the self-cleaning effect of the doctor blade. Since the doctor blade 92 is produced from to some extent flexible material, the wall between filtrate compartments 20 causes, when passing the tip of the doctor blade 92 a slight pressure increase in the space 98, which again causes the bending of the doctor blade 92 outwards from the wire surface, whereby, for example, an accumulation of fibers generated between the tip of the doctor blade 92 and the wire surface 22 is allowed to loosen and fall into the suspension. At the same time when the doctor blade 92 rises it also draws the pulp web slightly off from the wire surface 22. The cooperation of the doctor blade 92 and the removal medium may also be arranged in such a way that the clearance between the doctor blade and the wire surface may be minimized or said members may even be safely arranged into contact with each other. According to a preferred embodiment the flexibility of the doctor blade and the pressure of the pressure medium may be adjusted so that said pressure always bends the doctor blade to some extent, in other words so that there is in practice always a very narrow clearance between the wire surface and the doctor blade to allow the pressure medium flow. The advantage achieved thereby is that the arrangement also takes into consideration the possible defects in the shape of the cylinder, whereby the clearance between the tip of the doctor blade and the wire surface does not have to dimensioned according to the greatest deviation in the shape.

As is appreciated from the above description, a new kind of method and apparatus have been developed for treating pulp with a filter cylinder. Although the above description includes only an embodiment of the method and apparatus in accordance with the present invention, all such different variations are possible, which remain within the scope of invention defined in the accompanying patent claims.

## Claims

1. An apparatus for treating pulp, which apparatus mainly comprises a vessel (10), in which a wire-surfaced cylinder (12) rotatable around its shaft is mounted and tightly sealed at the ends, a doctor blade (92) located exteriorly of the wire surface (22) and a source of pressure medium for removing and discharging the pulp web from the wire surface, a plurality of filtrate compartments (20) located beside each other to form the shell of the filter cylinder (12), filtrate tubes located at least at one end of the cylinder and extending inwardly from the compartments and a suction means connected to the inner end of the filtrate tubes,
**characterized** in that
said doctor blade (92) is flexible in the direction of the radius of the cylinder (12), said doctor blade (92) being arranged to be flexible due to the pressure of said pressure medium.

2. The apparatus in accordance with claim 1,
**characterized** in that
there is a clearance between the tip of said doctor blade (92) and the surface (22) of said cylinder (12) and that said clearance is adjustable by means of the pressure of said pressure medium.

3. A method of treating pulp in a filter apparatus, where pulp is supplied into a vessel surrounding the cylinder, a pulp web is formed on the surface of a wire surfaced cylinder, water is removed from the pulp web through the wire surface, the pulp web is removed from the wire surface by a doctor blade and discharged from the apparatus, and the filtrate discharged through the wire surface is further led along filtrate tubes out of the filtering apparatus,
**characterized** by
forming a clearance between a tip of the doctor blade and the wire surface by forcing the tip of the doctor blade into a transverse movement, which is upright relative to the wire surface.

4. The method in accordance with claim 3,
**characterized** in that
the size of said clearance is arranged to be a function of the pressure of the pressure medium flow directed under the doctor blade and of the flexibility of the doctor blade so that a minor flow of pressure medium is always present under the doctor blade.

5. The method in accordance with claim 3,
**characterized** in that
the size of said clearance is varied, whereby the fibers accumulated and possibly attached in said clearance are removed.

6. The method in accordance with claim 3,
**characterized** in that
said transverse movement is carried out by arranging the clearance between the wire surface and the tip of the doctor blade so narrow that the movement of the wall between the filtrate compartments past the tip of the doctor blade causes an increase in pressure under the tip of the doctor blade, which increase in pressure again raises the tip of the doctor blade.

## Patentansprüche

1. Vorrichtung zur Behandlung von Halbstoff, welche Vorrichtung hauptsächlich besteht aus einem Behälter (10), in dem ein siebüberzogener um seine Welle drehbarer Zylinder (12) montiert und an den Enden dicht abgesperrt ist, einer außerhalb der Siebfläche (22) angeordneten Rakel (92) und einer Quelle für Druckmedium zur Abtragung und Ableitung der Stoffbahn von der Siebfläche , einer Vielzahl nebeneinander angeordneter, den Mantel des Filterzylinders 12) bildender Filtratabteile (20), Filtratrohren, die zumindest an einem Ende des Zylinders angeordnet sind und sich einwärts von den Abteilen erstrecken und mit dem inneren Enden der Filtratrohren verbundenen Saugmitteln, durch **gekennzeichnet,** daß die Rakel (92) in Richtung des Radius des Zylinders (12) flexibel ist, welche Rakel (92) so angeordnet ist, daß sie infolge des Drucks des Druckmediums nachgibt.

2. Vorrichtung nach Anspruch 1, dadurch **gekennzeichnet,** daß zwischen Spitze der Rakel (92) und Oberfläche (22) des Zylinders (12) ein Spalt vorhanden ist und daß der Spalt mit dem Druck des Druckmediums einstellbar ist.

3. Verfahren zur Behandlung von Halbstoff in einer Filtervorrichtung, wo Halbstoff in einen den Zylinder umschließenden Behälter geleitet wird, eine Halbstoffbahn auf der Oberfläche eines siebüberzogenen Zylinders gebildet wird, Wasser durch die Siebfläche der Halbstoffbahn entzogen wird, die Halbstoffbahn von der Siebfläche mittels einer Rakel entfernt und aus der Vorrichtung abgeleitet wird, und das das durch die Siebfläche abgezogene Filtrat in Filtratrohren weiter aus der Filtervorrichtung herausgeleitet wird,
dadurch **gekennzeichnet,** daß
zwischen Rakelspitze und Siebfläche ein Spalt gebildet wird, indem die Rakelspitze in eine gegenüber der Siebfläche senkrechte Querbewegung gezwungen wird.

4. Verfahren nach Anspruch 3
dadurch **gekennzeichnet,** daß
die Größe des Spalts als Funktion des Drucks des unter die Rakel geleiteten Druckmediums und der Flexibilität der Rakel arrangiert ist, so daß ein kleiner Druckmediumfluß stets unter der Rakel vorhanden ist.

5. Verfahren nach Anspruch 3,
dadurch **gekennzeichnet,** daß
die Größe des Spaltes geändert wird, wobei die in besagtem Spalt eventuell angesammelten und festgesetzten Fasern entfernt werden.

6. Verfahren nach Anspruch 3,
dadurch **gekennzeichnet,** daß
die Querbewegung durchgeführt wird, indem der Spalt zwischen Siebfläche und Rakelspitze so schmal gehalten wird, daß die Bewegung der Wand zwischen den Filtratabteilen an den Rakelspitzen vorbei einen Druckanstieg unter der Rakelspitze hervorruft, welcher Druckanstieg wiederum die Rakelspitze anhebt.

## Revendications

1. Dispositif pour traiter de la pâte, lequel dispositif comprend essentiellement une enceinte (10), dans laquelle un cylidre avec une surface à toile (12), capable de tourner autour de son arbre, est monté et hermétiquement fermé aux extrémités, un docteur (92) agencé à l'extérieur de la surface à toile (22) et une source de milieu de pression afin d'enlever et évacuer la feuille continue de pâte de la surface à toile, une pluralité de compartiments (20) ménagés côte à côte afin de former l'enveloppe du cylidre filtrant (12), des tubes de filtrat situés au moins à une extrémité du cylidre et s'étendant vers l'intérieur à partir des compartiments et un moyen d'aspiration reliés à l'extrémité intérieure des tubes de produit de filtrage,
**charactérisé** en ce que
ledit docteur (92) est flexible dans la direction du rayon du cylidre (12), ledit docteur (92) étant disposé pour être souple par suite de la pression dudit milieu de pression.

2. Dispositif selon la revendication 1, **caractérisé** en ce que il y a un espace entre le bout dudit docteur (92) et la surface (22) dudit cylidre (12) et en ce que ledit écartement est ajustable au moyen de la pression dudit milieu de pression.

3. Procédé de traitement de la pâte dans un dispositif filtrant, selon lequel de la pâte est délivrée dans une enceinte entourant le cylidre, une feuille continue de pâte est formée sur la surface du cylidre avec une surface à toile, de l'eau est enlevée de la feuille continue de pâte à travers la surface à toile, la feuille continue de pâte est enlevée de la surface à toile par un docteur et évacuée du dispositif, et le produit filtré évacué à travers la surface à toile est dirigé en outre le long des tubes de produit de filtrage hors du dispositif à filtrer,
**caractérisé** en ce que
on construit un écartement entre un bout du docteur et la surface à toile en obligeant le bout du docteur dans un mouvement transversal, qui est montant par rapport à la surface à toile.

4. Procédé selon la revendication 3, **caractérisé** en ce que la dimension dudit écartement est ajustée pour être une fonction de la pression du flux de milieu de pression dirigé sous le docteur et de la flexibilité du docteur, de manière qu'un écoulement mineur de milieu de pression soit toujours présent sous le docteur.

5. Procédé selon la revendication 3, **caractérisé** en ce que la dimension dudit espace est variée, de façon à ce que les fibres accumulées et eventuellement attachées dans ledit espace soient enlevées.

6. Procédé selon la revendication 3, **caractérisé** en ce que ledit mouvement transversal est effectué en disposant l'espace entre la surface à toile et le bout du docteur si étroit que le mouvement de la paroi entre les compartiments de produit filtrant au delà du bout du docteur provoque un accroissement de pression sous le bout du docteur, lequel accroissement de pression pour sa part soulève le bout du docteur.
